(19) Europäisches Patentamt / European Patent Office / Office européen des brevets

(11) **EP 4 212 828 B1**

(12) **EUROPEAN PATENT SPECIFICATION**

(45) Date of publication and mention
of the grant of the patent:
**04.12.2024 Bulletin 2024/49**

(21) Application number: **22151373.2**

(22) Date of filing: **13.01.2022**

(51) International Patent Classification (IPC):
***G01D 5/14*** *(2006.01)*

(52) Cooperative Patent Classification (CPC):
**G01D 5/145**

(54) **LONG STROKE LINEAR POSITION DETECTOR ARRANGEMENT**

LINEARE POSITIONSDETEKTORANORDNUNG MIT LANGEM HUB

AGENCEMENT DE DÉTECTEUR DE POSITION LINÉAIRE À LONGUE COURSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.07.2023 Bulletin 2023/29**

(73) Proprietor: **Goodix Technology (HK) Company
Limited
Sheung Shui (HK)**

(72) Inventor: **PHAN LE, Kim
6537 TL Nijmegen (NL)**

(74) Representative: **Nederlandsch Octrooibureau
P.O. Box 29720
2502 LS The Hague (NL)**

(56) References cited:
**EP-A1- 1 706 709        DE-U1- 202008 002 844
US-A1- 2010 039 103**

## Description

### Field of the invention

The present invention relates to a long stroke linear position detector arrangement, more in particular to a magnetic position detector arrangement for measuring a displacement along a first axis, comprising a first structural element and a second structural element moveable with respect to each other along the first axis, and positioned at a mutual distance. I.e. the first and second structural element are positioned in a plan-parallel manner. The present invention embodiments can be applied in applications requiring high accuracy over a long stroke movement, such as position sensing in (smartphone) camera modules.

### Background art

US patent publication US2010/0270469 discloses a lens position sensor for cameras, which is particularly useful in lens assemblies that have relatively limited axial travel between near field and far field lens focus positions. The camera includes a magnet or other stimulator coupled to a rotatable lens that extends within a magnet plane where the magnet plane is not normal to the optical axis of the lens. A magnetic or other sensor senses the position of the magnet, which is indicative of the lens position.

EP 1 706 709 A1 discloses a position sensor device for determining a position of a reciprocating object.

DE 20 2008 002844 U1 discloses a programable positioning sensor.

US 2010/039103 A1 a system for determining the position of a movable member.

### Summary of the invention

The present invention seeks to provide an improved magnetic position detector arrangement for measuring a displacement along a first axis (i.e. linear position), with a high accuracy over a long stroke in the order of 0.1%.

According to the present invention, a magnetic position detector arrangement according to claim 1 is provided.

The present invention embodiments allow to determine a displacement along the first axis (linear position) with a very high accuracy from the at least two sensor signals. Furthermore, the arrangement can be easily integrated in a camera module, such as a smartphone camera module.

### Short description of drawings

The present invention will be discussed in more detail below, with reference to the attached drawings, in which

Fig. 1A shows a graph of magnetic induction versus displacement for a typical slide-by Hall sensor configuration;
Fig. 1B shows a graph of magnetic induction versus displacement for a typical 'head-on' Hall sensor configuration;
Fig. 2 shows a schematic cross sectional view of a magnetic position detector arrangement according to a first embodiment of the present invention;
Fig. 3 shows a plot of sensor signals from the magnetic sensing elements shown in Fig. 2 as function of displacement;
Fig. 4 shows a plot of a sensor signal from the second magnetic sensing element versus a sensor signal from the first magnetic sensing element;
Fig. 5 shows a schematic cross sectional view of a magnetic position detector arrangement according to a second embodiment of the present invention;
Fig. 6 shows sensor signals from the magnetic sensing elements shown in Fig. 5 as function of displacement;
Fig. 7 shows a plots of a sensor signal from the second magnetic sensing element versus a sensor signal from the first magnetic sensing element, and of a sensor signal from the third magnetic sensing element versus a sensor signal from the first magnetic sensing element;
Fig. 8 shows a diagram of the number of ambiguity points for the configuration shown in Fig. 5 as function of a distance between the first and third magnetic sensing element;
Fig. 9 shows a schematic cross sectional view of a magnetic coder arrangement according to a third embodiment of the present invention; and
Fig. 10 shows a flow chart illustrating a position calculation algorithm applied in a present invention embodiment.

### Description of embodiments

Quality of smartphone cameras nowadays are catching up with bulky stand-alone cameras such as Digital Single-Lens-Reflect (DSLR) or full-frame mirrorless cameras thanks to continuous innovation and improvement in optics, miniaturization and image processing. Smartphones today have usually 2 or 3 back cameras, sometimes up to 4 - 5 cameras. Instead of having to exchange heavy lenses like photographers have to do in DSLR cameras ten years ago, smartphone users today can just simply point and shoot. The phone combines automatically pictures taken by multiple camera modules integrated in the phone and post-process them to result in a final picture with the highest picture quality within just a fraction of a second. From a recent analysis, it has been shown that smartphones are better than or comparable to stand-alone cameras in most aspects, except zoom quality.

To have an "optical" zoom picture, the smartphone uses pictures from its cameras with different focal lengths, e.g. of a primary camera (1x zoom) and a telephoto camera (e.g. 2x zoom), and blend them digitally to make a final picture of any zoom factor in between 1x and 2x. In smartphone models, telephoto camera lenses usually have focal length of about 5-7mm (zoom ratio of ~2x) which is simply limited by the thickness of the phone. Periscope type of telephoto camera modules have started to appear, wherein light coming from the scene is folded 90 degrees by a prism and travels along the length direction of the phone to reach the image sensor. In this way, the focal length can largely be extended, up to 20-30mm or more, which is equivalent to a zoom factor of 5-7x or even longer.

To date, all periscope (tele) cameras in smartphones are fixed focus. The effect of changeable zoom factor is still done by digitally blending of pictures. To further improve image quality, the zoom factor needs to be optically adjustable by moving some lens elements over a long stroke, for instance from 4mm, up to 15mm or longer, while maintaining positioning accuracy at the level of a few micrometers or better. The accuracy is required to be absolute, meaning that at all times, lens positions have to be determined accurately with respect to the image sensor.

The moving lens element can be actuated by a motor, such as Voice Coil Motor (VCM), piezoelectric motor, or Shape Memory Alloy (SMA) motor. The motor is driven by a driver IC using a closed-loop control technique, which requires absolute positioning of the lens element.

The stringent accuracy over the long stroke movement is a real challenge for any known positioning sensing technique used in the camera module industry. For instance, if the accuracy is required to be $3 \mu m$ over a stroke of 15mm, this is equivalent to a required accuracy of 0.02%.

In camera module industry, a well-known technique is to use a magnetic sensor (such as Hall-effect sensor, or any magneto-resistance effect sensor) to sense a magnetic field created by a tiny magnet. For instance, the magnet is attached to a moving lens, and a sensor is mounted on a fixed substrate. Magnetic field around the magnet changes with distance, therefore when the lens moves, magnetic field measured by the Hall sensor changes accordingly. This technique is usually good for short-range (such as for auto focus or image stabilization) due to high nonlinearity of magnetic field gradient. As a rule of thumb, working range of a Hall-based sensing technique is about the size of the magnet. For instance, a magnet used in camera module typically has a size of 0.5mm, thus, the working range is maximum 0.5mm.

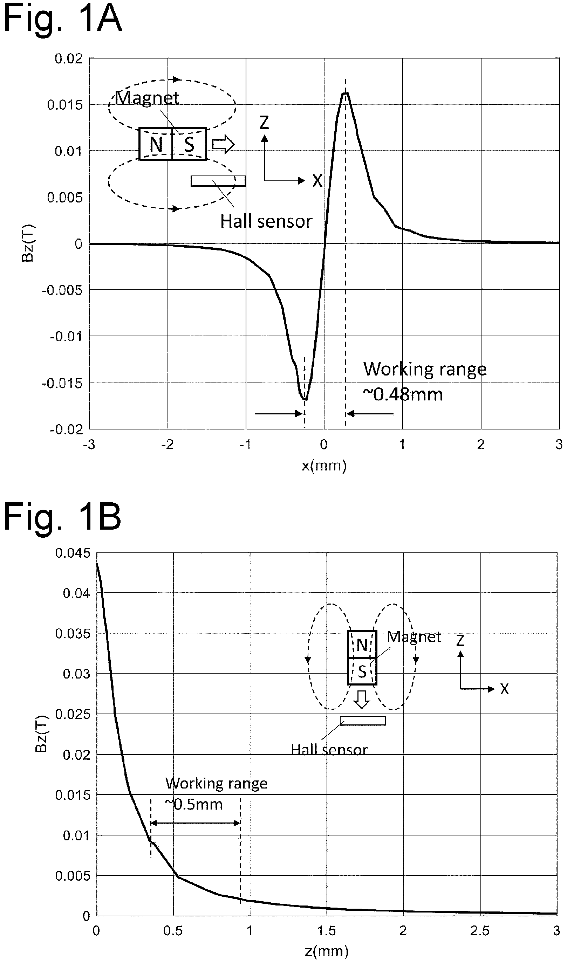

There are two Hall sensing configurations normally used in the camera module industry. The most popular configuration is the "slide-by" configuration, where the magnetization axis of the magnet is parallel to the moving direction, see Fig.1A. Fig. 1A shows a graph of magnetic induction versus displacement for a typical slide-by Hall sensor configuration. In this example, a magnet of size $0.5 \times 0.2 \times 0.2$ mm$^3$ is assumed. The magnetization direction is in the X direction, along the longest (0.5mm) dimension. The magnet is assumed to translate in the X direction with respect to a Hall sensor, at a distance of 0.3mm. The magnetic induction in the Z direction (which is the sensitive direction of the sensor), Bz, is plotted against the position X of the magnet. The working range of this configuration is the fairly linear part between the minimum and the maximum, which is about the length of the magnet (indicated as about 0.48mm). Beyond these points, even though the magnetic field is still large, the signal can't be used because the characteristic is multi-value.

The second configuration, somewhat less popular, is the "head-on" configuration, where the magnetization axis coincides with the moving direction, see Fig. 1B. Fig. 1B shows a graph of magnetic induction versus displacement for a typical 'head-on' Hall sensor configuration. The gradient of the magnetic field on the sensor is single-value, but highly nonlinear and reduces quickly as the magnet moves away from the sensor. The working range is therefore not much larger than about the 1-2 times the size of the magnet, in the shown example about 0.5mm with a magnet of similar size as in the Fig. 1A example.

Sensing techniques using more sensitive sensors are known, such as Anisotropic MagnetoResisance (AMR) sensor, Giant MagnetoResistance (GMR) sensor or Tunnel MagnetoResistance (TMR) sensor. These sensors are 1-2-3 orders of magnitude, respectively, more sensitive than Hall sensors, therefore allowing to sense weaker magnetic field and thus working range can be extended. However, since the sensor is more sensitive, it can also pick up unwanted magnetic interference such as from Voice Coil Motor magnets nearby in the same module, or any magnetic field from outside the phone such as a permanent magnet, or even earth magnetic field. Furthermore, GMR, TMR sensors are usually more expensive than Hall sensors and can't be directly integrated on Si.

For long movement stroke, a popular and classical linear position sensing technique is to use a magnetic encoder. This solution can provide accuracy of micrometers over a very long stroke. A typical setup consists of a magnetic sensor chip containing an array of Hall elements (e.g. four or more elements), and a magnetic strip or magnetic scale. The magnetic strip e.g. has two tracks of multipole magnets for incremental signal and absolute position signal. This concept is therefore not preferred for miniaturization and low cost in smartphone camera modules.

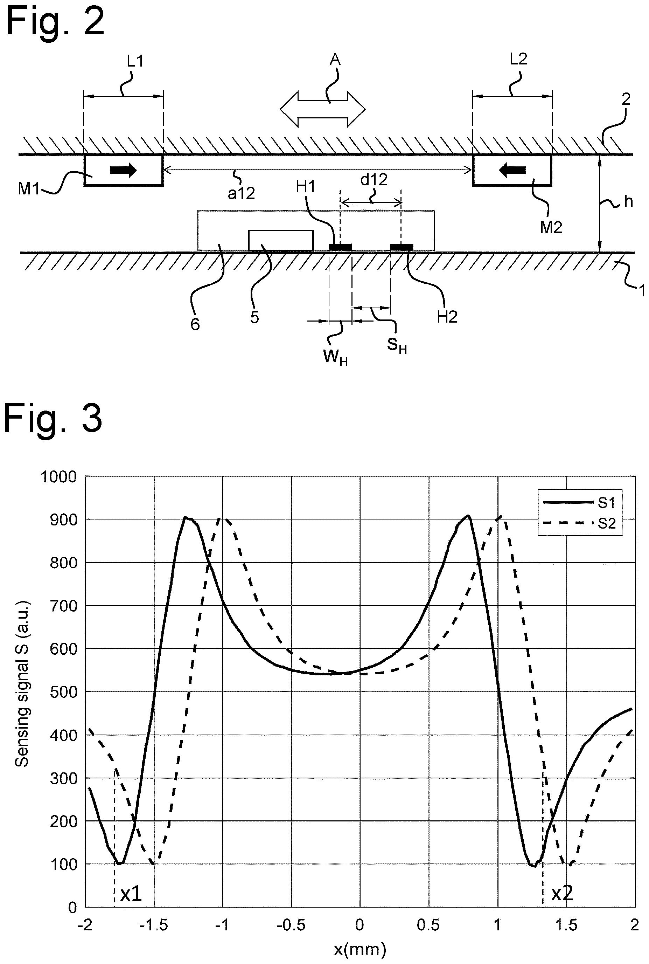

A technique to precisely sense linear, absolute position of at least one movable part within a device over a long stroke is subject of the present invention embodiments described herein. The magnetic position detector arrangement according to the present invention embodiments comprise a sensor IC 6 attached to a fixed location (e.g., first structural element 1), and at least two small magnets Mi attached to a movable part (e.g., second structural element 2). In a further exemplary configuration, the sensor IC 6 is attached to a movable part 2 and multiple magnets Mi are attached to a fixed part 1. An exemplary embodiment of a magnetic position detector arrangement is shown in the schematic cross sectional view in Fig. 2. The present invention embodiments relate in general to a magnetic position detector arrangement for measuring a displacement along a first axis A, comprising a first structural element 1 and a second structural element 2 moveable with respect to each other along the first axis A, and positioned at a mutual distance h perpendicular to the first axis A, at least two magnetic sensing elements Hj positioned on the first structural element 1 at a mutual sensor distance d along the first axis A, at least two magnets Mi positioned on the second structural element 2 at a mutual magnet distance a along the first axis A. A processing unit 5 is connected to the at least two magnetic sensing elements Hj, and arranged to determine the displacement along the first axis A using sensor signals Sj from the at least two magnetic sensing elements Hj.

The present invention embodiments can be applied to a scenario of long stroke, for instance, the lens elements on first and second structural elements 1, 2 may move over 1mm, 4mm, up to 15mm or longer. And accordingly the relative movement of the first structural element 1 and the second structural element 2 may be larger than 1 mm, for example, 5mm, 6mm or 10mm.

The sensor IC 6 comprises the processing unit 5 and at least two magnetic sensing elements Hj. The number of magnets Mi is selected proportional to the required movement stroke. With reference to the attached drawings, a number of exemplary embodiments will be described, with specific effects and advantages. It is noted that sizes, distances, magnetic moment directions, and magnetic induction of the magnets Mi can be similar, different or randomized. The number of magnetic sensing elements Hj may be more than two if necessary to overcome ambiguity over a long stroke. Distances between the magnetic sensing elements Hj and between the magnets Mi can be selected by an optimization process such that there is no ambiguity point and distinction of sensor signals at any position is maximized. Combinations of sensor signals are unique for each position and thus the position can be determined. In this way, by e.g. using a look-up table, possibly in combination with a searching algorithm, the absolute mutual position of the movable part(s) (first and second structural elements 1, 2) can always be determined, even directly after power-up. The present invention embodiments may be implemented as a part of a camera module for smartphones, such as the periscope camera module. The solution can also be used in any application where precise location of a linearly movable part or parts need to be determined.

A first exemplary embodiment of the present invention magnetic sensor arrangement is shown in the schematic cross sectional view of Fig. 2. The arrangement comprises two (permanent) magnets M1 and M2 of the same size of 0.2 x 0.2mm and length Li = 0.5mm, and placed at a distance a12 = 2mm from each other. The magnetic problem is considered planar, therefore the depth dimension is not important. The magnets M1, M2 are mounted on a moving part of e.g. a camera module, shown as second structural element 2. The magnetic moment of the magnets M1, M2 are pointing in opposite directions as shown in Fig. 2, parallel to the length of the magnets M1, M2, and to the movement direction (first axis A).

On a fixed frame (first structural element), there is an integrated circuit 6 with two integrated magnetic sensing elements H1 and H2. The sensitive direction of the magnetic sensing elements H1, H2 is perpendicular to the main plane of the integrated circuit 6. The magnetic sensing elements H1, H2 are located at a distance d12 = 0.25mm from each other. The distance between a sensor plane and the bottom surface of the magnets M1, M2 in this exemplary embodiment is 0.2mm.

The sensing signals S1, S2, which are proportional to the magnetic field from the magnets M1, M2 at the magnetic sensor elements H1, H2, versus x (the horizontal position of the second structural element 2 with respect to the first structural element 1 along the first axis A), are shown in the plotted graph of Fig. 3. The signals S1, S2 are e.g. quantized into 10 bit (1024 levels) digital signals. The magnetic field from the two magnets M1, M2 extends over 4 mm or more, allowing to measure a mutual position over this long stroke. It is straightforward to see that combinations of signals S1, S2 from both magnetic sensing elements H1, H2 will determine the position x of the moving part (second structural element 2) along the stroke of 4mm (i.e. along first axis A).

It is noted that there may be several positions at which the signal combinations S1, S2 as shown in Fig. 3 are ambiguous, but in a large range of displacement x, an unambiguous determination can be made.

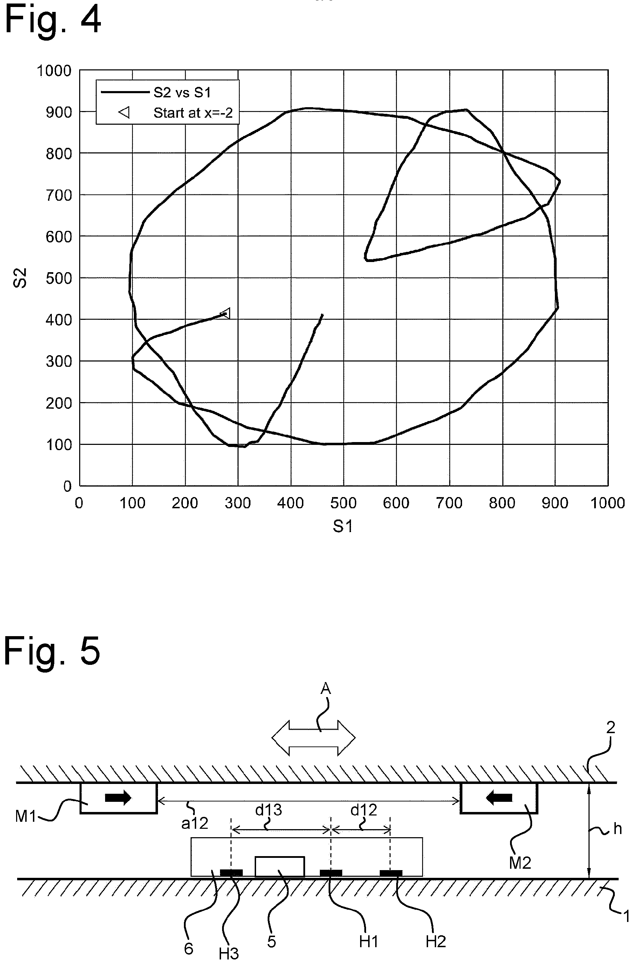

To visualize the possible ambiguity issue, sensor signal S2 is plotted versus sensor signal S1 in Fig. 4). Different points on this curve represent signal combinations S1, S2 at different positions x. It is intriguing to notice that this curve has no less than six crossing points, each of which represents two different positions x which correspond to one and the same combination of sensor signals S1 and S2 (ambiguity points). For example, the first ambiguity point encountered when starting at the triangle starting point (x=-2mm in the Fig. 3 plot) is corresponding to positions x=x1 and x=x2 in Fig. 3. At positions x1= -1.81mm and x2= 1.33mm, the combinations of sensor signal S1 and S2 are identical. In other words, when the sensor IC 6 detects this combination, it is impossible to tell if the second structural element 2 is at position x1 or at x2.

To address the ambiguity issue, a third magnetic sensing element H3 is added to the IC 6, e.g. at a distance of d13=0.5mm to the first magnetic sensing element H1, as shown in the schematic cross sectional view of a further embodiment in Fig. 5. This exemplary embodiment may be described as a magnetic position detector arrangement wherein the at least two magnetic sensing elements Hj comprise three magnetic sensing elements H1, H2, H3, which allows to resolve the ambiguity issue as explained further below.

Furthermore, in this exemplary embodiment, the three magnetic sensing elements H1, H2, H3 are positioned at unequal distances along the first axis A (i.e. d13>d12).

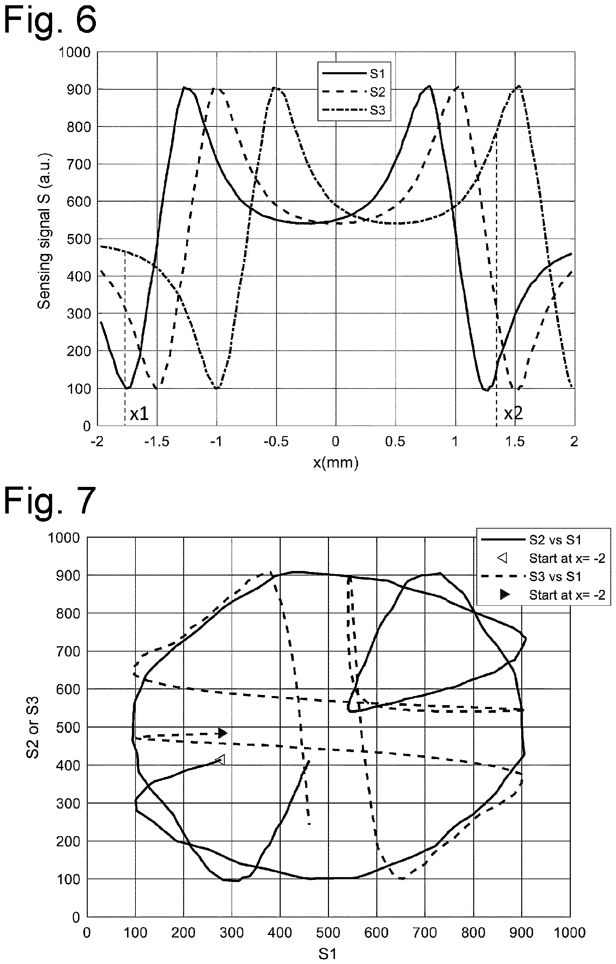

The sensing signals S1, S2, S3 of the magnetic sensing elements H1, H2, H3 versus position x are plotted in the graph shown in Fig. 6. It can be clearly seen that now at positions x1 and x2, even though the values of S1 and S2 are the same, the values of S3 are distinctly different, thus the ambiguity is solvable. In Fig. 6 it is shown that this is true for previous ambiguity points in the Fig. 4 plot. Fig. 7 shows a similar graph as in Fig. 4, with a second curve representing S3 versus S1. To avoid ambiguity, crossing points of S2 versus S1 curve are not to happen at the same S1 value as crossing points of S3 versus S1 curve. That means, to avoid ambiguity, no (self) crossing points of the two curves is allowed to be on a vertical line, which is the case in this particular embodiment.

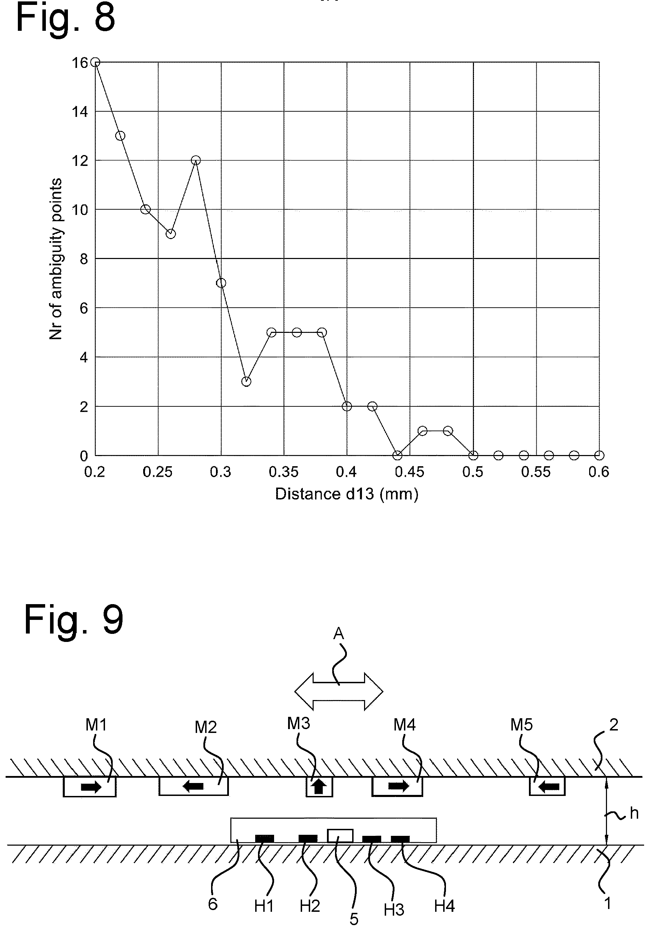

The arrangement configuration, such as distances d13 and d12 between magnetic sensing elements H1, H2, H3 and distance h between sensor plane and magnets plane, and a distance a12 between the magnets M1, M2, can be optimized by means of an optimization design process to make sure there is no ambiguity point and the separation in signal values at different positions is maximized. For example, if distance d12 is fixed at 0.25mm, distance d13 is assumed to vary from 0.2mm to 0.6mm, the number of ambiguity points is reduced and becomes steadily zero when d13 > 0.5mm, as shown in Fig. 8, which shows a graph of the number of ambiguity points for the configuration shown in Fig. 5 as function of the distance d13 between the first and third magnetic sensing element H1, H3. As seen in the above described example, with only two magnets M1, M2 of length 0.5mm, a stroke of 4mm can be covered by the magnetic position detector arrangement, which is much larger than the total length of the magnets M1, M2 together.

To extend the stroke further, more magnets Mi may be added in further embodiments of the present invention. E.g. to cover a stroke of 6mm, at least three magnets Mi of similar size are used, and so on. As a rule of thumb, each magnet Mi can cover a span of about four times its length Li. At a larger span more than four times its length Li, magnetic field from the magnet Mi may be too small to be detected by a typical magnetic sensing element Hj, such as a Hall sensor.

When more than two magnets Mi are used, magnetic moment vectors of the magnets Mi are alternating (e.g. left-right-left-...) such that there is a maximum field gradient on the sensor plane of the associated magnetic sensing elements Hj, along the entire stroke. In generic wording, in a further embodiment a magnetic position detector arrangement is provided, wherein a magnetic moment vector of two adjacent ones of the at least two magnets Mi are oppositely directed.

To avoid repeated magnetic patterns along the stroke, distances a between magnets Mi, magnet sizes, and even magnetic induction strength and directions may be different in further embodiments.

For an even longer stroke with more than two magnets, more magnetic sensing elements Hj may be added to avoid ambiguity if needed. Fig. 9 shows a schematic cross sectional view of an even further exemplary embodiment of the present invention, wherein five magnets M1-M5 and four magnetic sensing elements H1-H4 are used. Sizes of the magnets M1-M5 and distances a between them are varied. Distances d between the magnetic sensing elements H1-H4 are also different. Magnetic moment directions are alternated. and at least one magnet M3 has the magnetic moment vector perpendicular to the movement along the first axis A. This is implemented to avoid repeated patterns, thus avoiding ambiguity in signal combinations. Thus, in a further embodiment, a magnetic position detector arrangement is provided, wherein the at least two magnets Mi comprise five magnets M1-M5, and the at least two magnetic sensing elements Hj comprise four magnetic sensing elements H1-H4. In addition, or alternatively, the magnetic moment vector of one or more of the five magnets M1-M5 may be perpendicular to the first axis A.

In even further alternative embodiments, the direction of magnetic moment is in a range between 0 and 90 degrees to the first axis A. This would e.g. result in a configuration similar to the embodiment shown in Fig. 2, 5 or 9, where instead of being parallel to axis A, magnetic moments of M1/M2 or M1-M5 can also be perpendicular to axis A and opposite to each other. E.g. the Fig. 9 embodiment may be adapted wherein magnetic moment directions of the five magnets M1-M5 can be arbitrary (but advantageously alternating in orientation from one magnet to an adjacent one), and at least one magnet has the magnetic moment in a different direction than others (e.g. perpendicular to first axis A).

As a general guideline for the magnet Mi size (length Li) and mutual magnet distance a, the magnet length $L_i$ is taken as starting point, wherein i is an index of magnet Mi, within the total number of N magnets Mi. The distance between the magnets i and i+1 is selected to be $a_{i,i+1}=k*(L_i/2+L_{i+1}/2)$, wherein k is an integer value between 1 and 7, e.g. between 3 and 5, e.g. equal to 4. The total stroke that the magnetic position detector arrangement then can cover is:

$$S = \sum_{i=1}^{N} k L_i$$

In the exemplary embodiment shown in Fig. 5, k=4, N=2, $L_i=L_{i+1}=0.5$mm, and therefore S=4mm.

In other words, in a further embodiment, a magnetic position detector arrangement is provided, wherein the at least two magnets Mi each have an associated magnet length $L_i$ along the first axis A, and a distance $a_{i,i+1}$ between two adjacent ones of the at least two magnets Mi is defined as:

$a_{i,i+1}=k*(L_i/2+L_{i+1}/2)$, wherein k is an integer value between 1 and 7. The value of k is e.g. between 3 and 5, e.g. k=4.

When selecting the value of k=4, the distance a12 between two magnets M1, M2 is thus 2mm, which is used as an example in the description above in relation to the Fig. 2 and Fig. 5 embodiments. The size of the magnets Mi selected for this example, which is 0.2 x 0.2 x 0.5mm, and thus the distance a12 are typical for camera modules, but may be different in further application embodiments.

The size of the magnetic sensing elements Hj is as small as possible to obtain a high resolution (point size sensing). E.g. a silicon-based Hall sensor chip often comprises several Hall plates located close to each other. This cluster of Hall plates is present for the so-called current-spinning technique to overcome Hall voltage offset drift due to temperature and stress changes. The size of such a Hall plate cluster is typically from 40 to 150 $\mu$m, depending on the silicon processing technology, and sensor design.

A minimum sensor to sensor distance is defined by the sensor size. The distance is defined to be from the center of one sensor to the center of the next sensor. The minimum distance is at least equal to the sensor size, but more advantageously 1.5 times the sensor size. For instance, if the size of a Hall sensor (comprising 4 Hall plates in a cluster) is 60 $\mu$m, the minimum distance between two sensors is 60 $\mu$m, or more advantageously 80 $\mu$m. Thus in a further embodiment of the present invention, the at least two magnetic sensing elements Hj each have an associated sensor length along the first axis A, and a minimum distance between two adjacent ones of the at least two magnetic sensing elements Hj is at least equal to 1.5 times the associated sensor length.

A maximum sensor to sensor distance is defined by two factors, depending on which one is more limiting. The first factor is the decay length of the vertical component of the magnetic induction B along the line connecting the sensors Hj, on the sensor plane. The vertical component of the magnetic induction is maximum when an edge of the magnet Mi is aligned to the magnetic sensing element Hj, then decays toward zero when the magnet moves further away (see also Fig. 1A and 1B as discussed above). The decay length in this context is defined as the distance between the edge alignment position and the position where the magnetic signal is equal or smaller than the detection threshold of the magnetic sensing element Hj. Typically, the decay length is about 1.5 times the magnet length, $L_i$. The maximum distance between the magnetic sensing elements Hj are selected to be no larger than the decay length of the shortest magnet Mi. For instance, if the magnet length is $L_i=0.5$mm (assuming all magnets Mi have the same length), the decay length is $1.5*L_i=0.75$mm, and therefore the maximum distance between the magnetic sensing elements Hj is also 0.75mm. Thus, in a further embodiment, a maximum distance between two adjacent ones of the at least two magnetic sensing elements Hj is at least equal to the associated magnet length $L_i$ along the first axis A. E.g. the maximum distance can be selected between 1 and 5 for obtaining a proper sensing operation of the magnetic sensing elements Hj. The selection may e.g. depend on the sensitivity of the magnetic sensing elements Hj: If a Hall sensor is used, a maximum distance of 1.5 times the associated magnet length $L_i$, and if a GMR or TMR sensor is used (having orders of magnitude higher sensitivity), the maximum distance can be higher.

The second factor that defines the maximum sensor to sensor distance is the allowed dimensions of the integrated circuit 6. Since all magnetic sensing elements Hj are supposed to be integrated on a single substrate (silicon die of an IC), the largest dimension of the silicon die defines the maximum distance. Thus, in a further embodiment, the at least two magnetic sensing elements Hj are provided in one integrated circuit 6, allowing an efficient integration in many applications, by attaching the single integrated circuit 6 to either the first or second structural element 1, 2. Alternatively, if the integrated circuit 6 comprises more than one die, then the maximum distance is defined by the maximum distance between two spots on two different dies in the same sensor package.

The relevant vertical distance h between magnetic sensing elements Hj and magnets Mi is defined as the distance between the surface of the magnets Mi closest to the sensors Hj, and the sensor plane. This distance h is selected as small as possible to obtain a high magnetic gradient and absolute value of magnetic induction sensed by the magnetic sensing elements Hj. The minimum distance furthermore depends on the magnetic position detector arrangement construction, which defines how far the distance between the sensor plane and the upper surface of the sensor die/ sensor package can be. Furthermore, also specific application design dimensions play a role, such as a camera module assembly capabilities and/or tolerances. The sensor IC 6 as shown in the embodiments described herein is placed at a distance allowing a mass production process without touching the magnets Mi during operation. Typically, a distance between magnet surface and sensor die surface (in case of a bare die, and flip chip process) found in camera modules is from 0.2 to 0.6mm. In other words, in a further embodiment a magnetic position detector arrangement is provided, wherein a shortest distance in a direction perpendicular to the first axis A between a first plane spanning the at least two magnets Mi and a second plane spanning the at least two magnetic sensing elements Hj is between 25% and 200% of the magnet length $L_i$. In an actual implementation this may correspond to a shortest distance of e.g. between 0.2mm and 0.6mm.

The relevant horizontal position of the magnetic sensing elements Hj with respect to the magnets Mi is related to the stroke range S of the magnetic position detector arrangement. The magnetic sensing elements Hj operate (move) within a range defined by the overall length of the magnet assembly formed by the at least two magnets Mi, plus decay lengths of the outermost magnets Mi. This is implemented to ensure that there is always a detectable magnetic field at any magnetic sensing element Hj, at any position within the working range. Any of the magnetic sensing elements Hj is not moving further than the edge of the outermost magnet Mi, plus a decay length of that magnet Mi. For instance, referring to the embodiment shown in Fig. 5, and assuming the magnet length Li of both magnets M1, M2 to be 0.5mm, the distance a12 between the magnets M1, M2 is 2mm, then the overall length of the magnet assembly is 0.5+2+0.5 = 3mm. The decay length of the two magnets M1, M2 is 1.5*0.5=0.75mm. Accordingly, the maximum operating range in this exemplary embodiment is 3+0.75+0.75 = 4.5mm. During operation, the sensor IC 6 moves relatively with the magnet assembly such that the sensor on the left (H3) is not moving further than the edge of the left magnet M1 plus its decay length, that is the edge of M1 plus 0.75mm. Similarly, the sensor on the right (H2) is not moving further than the edge of M2 plus the decay length, that is the edge of M2 plus 0.75mm.

In general, Hall sensors may be used as the magnetic sensing elements Hj in the present magnetic position detector arrangement embodiments, since Hall sensors can be easily integrated in silicon integrated circuits. It is noted that alternatively, any suitable magnetic sensing element may be used. In a further embodiment, the at least two magnetic sensor elements Hj are one of: Hall sensors, anisotropic magneto resistance (AMR) sensors, giant magneto resistance (GMR) sensors or tunnel magneto resistance (TMR) sensors.

In even further embodiments of the present invention, the magnetic sensing elements Hj may be integrated in a motor driver IC as an example of the integrated circuit 6 discussed above. The motor drive IC may comprise of a digital / microcontroller block, a power driver block, a sensing block (with the magnetic sensing elements Hj), and other blocks such as communication block, power supply block. The motor drive IC and connected motor are used e.g. to move one of the first and second structural element 1, 2 along the first axis A.

In the above described exemplary embodiments, the magnets Mi are attached to the first structural (e.g. moving) element 1 while the sensor IC 6 with magnetic sensing elements Hj is mounted on the second structural element (e.g. fixed frame), such as a housing of the camera module. Alternatively, the sensor IC 6 with magnetic sensing elements Hj is mounted on the first structural (moving) element 1 and the magnets Mi are mounted on the second structural element 2 (fixed frame).

In case where more than one moving part is closely located within the device (e.g. a focus lens group and an afocal zoom lens group of a zoom camera module), the magnets Mi are advantageously mounted on the second structural element 2 (fixed frame) while the sensor ICs 6 (one IC for each movement) is mounted on the first structural element 1 (moving part). In this way, cross-talk between sensing signals of the two moving parts can be eliminated. If, due to some reasons, the sensor ICs 6 have to be mounted on the fixed frame, the magnets Mi of the two moving parts are sufficiently separated to minimize cross-talk.

It is noted that in the above examples, a 10-bit resolution was assumed to be applied. If the resolution/accuracy needs to be higher, the number of ambiguity points can only be reduced. That means, once no ambiguity point is guaranteed for a low-bit resolution, there would be no ambiguity point either if the resolution would be increased.

The sensitive direction of the magnetic sensing elements may alternatively be parallel to the plane of the integrated circuit 6, e.g. using another type of sensor, such as the vertical Hall plates. In this case, the magnetization direction of the magnets Mi is selected as perpendicular to the IC 6 plane.

In a further embodiment, the processing unit 5 is arranged to determine the displacement along the first axis A using a a look-up table. The determination may be accomplished using a searching algorithm, e.g. a look-up table, a look-up table in combination with interpolation or nonlinear least squares solver, fitted function. Position of the moving part (or mutual position of first and second structural elements 1, 2) is calculated from sensor signals Sj, using any suitable searching algorithm, such as look-up table, look-up table in combination with interpolation and nonlinear least square solver, or fitted functions, etc. The look-up table or fitted functions may be predefined by characterization or a calibration step during the manufacture of the device.

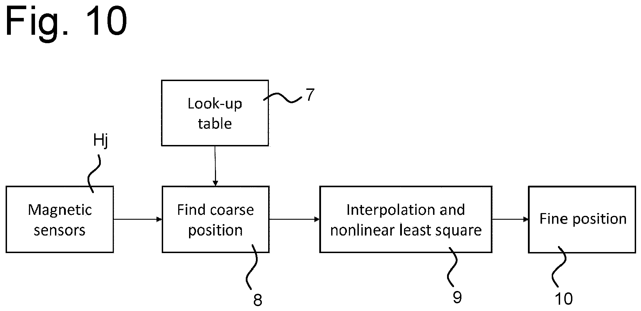

In Fig. 10, an example of a flowchart of an algorithm to calculate position is given. In the memory of the IC 6, a look-up table 7 may be stored. The look-up table 7 may also be stored in an external memory and loaded to the IC 6 upon power-up. The look-up table 7 may store data for all magnetic sensing elements Hj, but may also be for one of the magnetic sensing elements Hj. Since the magnetic sensing elements Hj are shifted spatially from each other, data of other magnetic sensing elements Hj can be derived from that of the first magnetic sensing element Hj. The look-up table may include data for position intervals larger than required accuracy.

During operation, signals Sj from all magnetic sensing elements Hj are gathered and searched within the look-up table 7 to find the closest matched combination, from which a coarse position is determined (block 8 in Fig. 10). In a next step, a few data points in the look-up table 7 around this coarse position are used to define a more accurate position 10 using interpolation, and nonlinear least square solver (block 9).

The calibration data of the magnetic sensing elements Hj may also be fitted to a function and corresponding parameters can be stored in the memory. During operation, the function can be reconstructed using the stored parameters.

Instead of storing raw data of sensor signal Sj vs. position x, the sensor data may also be compressed and stored. During power-up time, the compressed data is loaded to the sensor IC 6 and decompressed. As an example of the compression method, raw data is transformed into spatial frequency domain using Fourier transform. The Fourier transform is optimized such that minimum length is required while accuracy can still be maintained. In this way, the number of stored data points (when stored in the Fourier transformed format) can be reduced compared to raw data, without loss of accuracy. During operation, inverse Fourier transform is performed to reconstruct the sensor signal Sj vs position x data, and interpolation (up-sampling) can be made to get accurate position without loss of information.

As described above, the present invention embodiments relate to a magnetic position detector arrangement or sensor configuration for linear, long stroke position sensing, having at least two magnets Mi and a sensor integrated circuit 6 with at least two magnetic sensing elements Hj. The number of magnets Mi is proportional to the required movement stroke. Sizes, distances, magnetic moment directions, and magnetic induction strength of the magnets Mi can be identical, different or randomized. Thus, in one group of embodiments, the at least two magnets Mi are identical, and in a further group of embodiments, the at least two magnets Mi e.g. have a different magnetic induction field distribution, e.g. by selecting different dimensions and/or different magnetic characteristics.

The number of magnetic sensing elements Hj may be three or more to allow overcoming ambiguity issues over a long stroke. Distances d between the magnetic sensing elements Hj can be designed by an optimization process such that there is no ambiguity point and distinction of sensor signals Sj at any position is maximized. Combinations of sensor signals Sj are unique for each position and thus the position can be determined.

The present invention embodiments are advantageously applied as a part of a camera module for e.g. smartphones, such as a periscope camera module, and can also be advantageously used any other application where precise location of a linearly movable part or parts need to be determined.

The present invention has been described above with reference to a number of exemplary embodiments as shown in the drawings. Modifications and alternative implementations of some parts or elements are possible, and are included in the scope of protection as defined in the appended claims.

**Claims**

1. Magnetic position detector arrangement for measuring a displacement along a first axis (A), comprising

   a first structural element (1) and a second structural element (2) moveable with respect to each other along the first axis (A), and positioned at a mutual distance (h) perpendicular to the first axis (A),
   at least two magnetic sensing elements (Hj, H1, H2) positioned on the first structural element (1) at a mutual sensor distance (d, d12) along the first axis (A),
   at least two magnets (Mi, M1, M2) positioned on the second structural element (2) at a mutual magnet distance (a, a12) along the first axis (A), wherein a magnetic moment vector of two adjacent ones of the at least two magnets (Mi, M1, M2) are oppositely directed and parallel to the first axis (A), and
   a processing unit (5) connected to the at least two magnetic sensing elements (Hj, H1, H2), and arranged to determine the displacement along the first axis (A) using sensor signals (Sj, S1, S2) from the at least two magnetic sensing elements (Hj, H1, H2).

2. Magnetic position detector arrangement according to claim 1, wherein the at least two magnets Mi each have an associated magnet length Li along the first axis (A), and a distance ai,i+1 between two adjacent ones of the at least two magnets Mi is defined as:

$$a_{i,i+1} = k*(L_i/2 + L_{i+1}/2),$$

   wherein k is an integer value between 1 and 7, and i is an index of magnet Mi, within the total number of N magnets Mi.

3. Magnetic position detector arrangement according to claim 1 or 2, wherein the at least two magnetic sensing elements (Hj, H1, H2) each have an associated sensor length along the first axis (A), and a minimum distance between two adjacent ones of the at least two magnetic sensing elements (Hj, H1, H2) is at least equal to 1.5 times the associated sensor length.

**4.** Magnetic position detector arrangement according to claim 3, wherein a maximum distance between two adjacent ones of the at least two magnetic sensing elements (Hj, H1, H2) is at least equal to the associated magnet length (Li, L1, L2) along the first axis (A), and wherein the minimum distance is less than the maximum distance.

**5.** Magnetic position detector arrangement according to any one of claims 1-4, wherein the at least two magnetic sensing elements (Hj) comprise three magnetic sensing elements (H1, H2, H3).

**6.** Magnetic position detector arrangement according to claim 5, wherein the three magnetic sensing elements (H1, H2, H3) are positioned at unequal distances along the first axis (A).

**7.** Magnetic position detector arrangement according to any one of claim 1-4, wherein the at least two magnets (Mi) comprise five magnets (M1-M5), and the at least two magnetic sensing elements (Hj) comprise four magnetic sensing elements (H1-H4).

**8.** Magnetic position detector arrangement according to claim 7, wherein the magnetic moment vector of one or more of the five magnets (M1-M5) is perpendicular to the axis (A).

**9.** Magnetic position detector arrangement according to any one of claims 1-8, wherein a shortest distance in a direction perpendicular to the first axis (A) between a first plane spanning the at least two magnets (Mi, M1, M2) and a second plane spanning the at least two magnetic sensing elements (Hj, H1, H2) is between 25% and 200% of the magnet length (Li, L1, L2).

**10.** Magnetic position detector arrangement according to any one of claims 1-9, wherein the at least two magnetic sensing elements (Hj, H1, H2) are provided in one integrated circuit (6).

**11.** Magnetic position detector arrangement according to any one of claims 1-10, wherein the at least two magnets (Mi, M1, M2) are identical.

**12.** Magnetic position detector arrangement according to any one of claims 1-11, wherein the at least two magnets (Mi, M1, M2) have a different magnetic induction field distribution.

**13.** Magnetic position detector arrangement according to any one of claims 1-12, wherein the at least two magnetic sensor elements (Hj, H1, H2) are one of: Hall sensors, anisotropic magneto resistance (AMR) sensors, giant magneto resistance (GMR) sensors or tunnel magneto resistance (TMR) sensors.

**14.** Magnetic position detector arrangement according to any one of claims 1-13, wherein the processing unit (5) is arranged to determine the displacement along the first axis (A) using a look-up table.

**Patentansprüche**

**1.** Magnetische Positionsdetektoranordnung zum Messen einer Verschiebung entlang einer ersten Achse (A), die Folgendes umfasst:

ein erstes Strukturelement (1) und ein zweites Strukturelement (2), die entlang der ersten Achse (A) in Bezug zueinander beweglich sind und in einem gegenseitigen Abstand (h) senkrecht zu der ersten Achse (A) angeordnet sind, mindestens zwei magnetische Sensorelemente (Hj, H1, H2), die auf dem ersten Strukturelement (1) in einem gegenseitigen Sensorabstand (d, d12) entlang der ersten Achse (A) angeordnet sind, mindestens zwei Magnete (Mi, M1, M2), die auf dem zweiten Strukturelement (2) in einem gegenseitigen Magnetabstand (a, a12) entlang der ersten Achse (A) angeordnet sind, wobei ein magnetischer Momentvektor von zwei benachbarten der mindestens zwei Magnete (Mi, M1, M2) entgegengesetzt gerichtet und parallel zu der ersten Achse (A) ist, und eine Verarbeitungseinheit (5), die mit den mindestens zwei magnetischen Sensorelementen (Hj, H1, H2) verbunden ist und so angeordnet ist, dass sie die Verschiebung entlang der ersten Achse (A) unter Verwendung von Sensorsignalen (Sj, S1, S2) von den mindestens zwei magnetischen Sensorelementen (Hj, H1, H2) bestimmt.

**2.** Magnetische Positionsdetektoranordnung nach Anspruch 1, wobei die mindestens zwei Magnete Mi jeweils eine assoziierte Magnetlänge Li entlang der ersten Achse (A) aufweisen und ein Abstand $a_{i,i+1}$ zwischen zwei benachbarten der mindestens zwei Magnete Mi wie folgt definiert ist:

$$a_{i,i+1}=k^*(L_i/2+L_{i+1}/2),$$

wobei k ein ganzzahliger Wert zwischen 1 und 7 ist und i ein Index des Magneten Mi innerhalb der Gesamtzahl von N Magneten Mi ist.

**3.** Magnetische Positionsdetektoranordnung nach Anspruch 1 oder 2, wobei die mindestens zwei magnetischen Sensorelemente (Hj, H1, H2) jeweils eine assoziierte Sensorlänge entlang der ersten Achse (A) aufweisen und ein minimaler Abstand zwischen zwei benachbarten der mindestens zwei magnetischen Sensorelemente (Hj, H1, H2) mindestens gleich dem 1,5-fachen der assoziierten Sensorlänge ist.

4. Magnetische Positionsdetektoranordnung nach Anspruch 3, wobei ein maximaler Abstand zwischen zwei benachbarten der mindestens zwei magnetischen Sensorelemente (Hj, H1, H2) mindestens gleich der assoziierten Magnetlänge (Li, L1, L2) entlang der ersten Achse (A) ist und wobei der minimale Abstand kleiner als der maximale Abstand ist.

5. Magnetische Positionsdetektoranordnung nach einem der Ansprüche 1-4, wobei die mindestens zwei magnetischen Sensorelemente (Hj) drei magnetische Sensorelemente (H1, H2, H3) umfassen.

6. Magnetische Positionsdetektoranordnung nach Anspruch 5, wobei die drei magnetischen Sensorelemente (H1, H2, H3) in ungleichen Abständen entlang der ersten Achse (A) angeordnet sind.

7. Magnetische Positionsdetektoranordnung nach einem der Ansprüche 1-4, wobei die mindestens zwei Magnete (Mi) fünf Magnete (M1-M5) umfassen und die mindestens zwei magnetischen Sensorelemente (Hj) vier magnetische Sensorelemente (H1-H4) umfassen.

8. Magnetische Positionsdetektoranordnung nach Anspruch 7, wobei der magnetische Momentvektor von einem oder mehreren der fünf Magnete (M1-M5) senkrecht zu der Achse (A) steht.

9. Magnetische Positionsdetektoranordnung nach einem der Ansprüche 1-8, wobei ein kürzester Abstand in einer Richtung senkrecht zu der ersten Achse (A) zwischen einer ersten Ebene, die die mindestens zwei Magnete (Mi, M1, M2) überspannt, und einer zweiten Ebene, die die mindestens zwei magnetischen Sensorelemente (Hj, H1, H2) überspannt, zwischen 25 % und 200 % der Magnetlänge (Li, L1, L2) beträgt.

10. Magnetische Positionsdetektoranordnung nach einem der Ansprüche 1-9, wobei die mindestens zwei magnetischen Sensorelemente (Hj, H1, H2) in einer integrierten Schaltung (6) vorgesehen sind.

11. Magnetische Positionsdetektoranordnung nach einem der Ansprüche 1-10, wobei die mindestens zwei Magnete (Mi, M1, M2) identisch sind.

12. Magnetische Positionsdetektoranordnung nach einem der Ansprüche 1-11, wobei die mindestens zwei Magnete (Mi, M1, M2) eine unterschiedliche magnetische Induktionsfeldverteilung aufweisen.

13. Magnetische Positionsdetektoranordnung nach einem der Ansprüche 1-12, wobei die mindestens zwei magnetischen Sensorelemente (Hj, H1, H2) einer von Folgenden sind: Hall-Sensoren, anisotrope Magnetwiderstands(AMR)-Sensoren, Riesen-Magnetwiderstands(GMR)-Sensoren oder Tunnelmagnetwiderstands(TMR)-Sensoren.

14. Magnetische Positionsdetektoranordnung nach einem der Ansprüche 1-13, wobei die Verarbeitungseinheit (5) so angeordnet ist, dass sie die Verschiebung entlang der ersten Achse (A) unter Verwendung einer Nachschlagetabelle bestimmt.

**Revendications**

1. Agencement de détecteur de position magnétique pour mesurer un déplacement le long d'un premier axe (A), comprenant

un premier élément structurel (1) et un deuxième élément structurel (2) mobiles l'un par rapport à l'autre le long du premier axe (A), et positionnés à une distance mutuelle (h) perpendiculaire au premier axe (A),
au moins deux éléments de détection magnétique (Hj, H1, H2) positionnés sur le premier élément structurel (1) à une distance mutuelle de capteur (d, d12) le long du premier axe (A),
au moins deux aimants (Mi, M1, M2) positionnés sur le deuxième élément structurel (2) à une distance mutuelle d'aimant (a, a12) le long du premier axe (A), où un vecteur de moment magnétique de deux adjacents parmi les au moins deux aimants (Mi, M1, M2) sont dirigés de manière opposée et parallèles au premier axe (A), et
une unité de traitement (5) connectée aux au moins deux éléments de détection magnétique (Hj, H1, H2), et agencée pour déterminer le déplacement le long du premier axe (A) en utilisant des signaux de capteur (Sj, S1, S2) provenant des au moins deux éléments de détection magnétique (Hj, H1, H2).

2. Agencement de détecteur de position magnétique selon la revendication 1, où les au moins deux aimants Mi ont chacun une longueur d'aimant associée Li le long du premier axe (A), et une distance $a_{i, i+1}$ entre deux adjacents parmi les au moins deux aimants Mi est définie comme: $a_{i,i+1} = k*(L_i/2 + L_i + 1/2)$ où k est une valeur entière comprise entre 1 et 7, et i est un indice de l'aimant Mi, compris dans le nombre total de N aimants Mi.

3. Agencement de détecteur de position magnétique selon la revendication 1 ou 2, où les au moins deux éléments de détection magnétique (Hj, H1, H2) ont chacun une longueur de capteur associée le long du premier axe (A), et une distance minimale entre deux adjacents parmi les au moins deux éléments de détection magnétique (Hj, H1, H2) est au moins égale à 1,5 fois la longueur de capteur associée.

4. Agencement de détecteur de position magnétique selon la revendication 3, où une distance maximale entre deux adjacents parmi les au moins deux éléments de détection magnétique (Hj, H1, H2) est au moins égale à la longueur d'aimant associée (Li, L1, L2) le long du premier axe (A), et où la distance minimale est inférieure à la distance maximale.

5. Agencement de détecteur de position magnétique selon l'une quelconque des revendications 1 à 4, où les au moins deux éléments de détection magnétique (Hj) comprennent trois éléments de détection magnétique (H1, H2, H3).

6. Agencement de détecteur de position magnétique selon la revendication 5, où les trois éléments de détection magnétique (H1, H2, H3) sont positionnés à des distances inégales le long du premier axe (A).

7. Agencement de détecteur de position magnétique selon l'une quelconque des revendications 1 à 4, où les au moins deux aimants (Mi) comprennent cinq aimants (M1-M5), et les au moins deux éléments de détection magnétique (Hj) comprennent quatre éléments de détection magnétique (H1-H4).

8. Agencement de détecteur de position magnétique selon la revendication 7,
où le vecteur de moment magnétique d'un ou plusieurs des cinq aimants (M1-M5) est perpendiculaire à l'axe (A).

9. Agencement de détecteur de position magnétique selon l'une quelconque des revendications 1 à 8, où une distance la plus courte dans une direction perpendiculaire au premier axe (A) entre un premier plan englobant les au moins deux aimants (Mi, M1, M2) et un deuxième plan englobant les au moins deux éléments de détection magnétique (Hj, H1, H2) est comprise entre 25 % et 200 % de la longueur d'aimant (Li, L1, L2).

10. Agencement de détecteur de position magnétique selon l'une quelconque des revendications 1 à 9, où les au moins deux éléments de détection magnétique (Hj, H1, H2) sont disposés dans un circuit intégré (6).

11. Agencement de détecteur de position magnétique selon l'une quelconque des revendications 1 à 10, où les au moins deux aimants (Mi, M1, M2) sont identiques.

12. Agencement de détecteur de position magnétique selon l'une quelconque des revendications 1 à 11, où les au moins deux aimants (Mi, M1, M2) ont une distribution de champ d'induction magnétique différente.

13. Agencement de détecteur de position magnétique selon l'une quelconque des revendications 1 à 12, où les au moins deux éléments de détection magnétique (Hj, H1, H2) sont parmi : des capteurs à effet Hall, des capteurs à magnétorésistance anisotrope (AMR), des capteurs à magnétorésistance géante (GMR) ou des capteurs à magnétorésistance tunnel (TMR).

14. Agencement de détecteur de position magnétique selon l'une quelconque des revendications 1 à 13, où l'unité de traitement (5) est agencée pour déterminer le déplacement le long du premier axe (A) en utilisant une table de consultation.

# Fig. 1A

# Fig. 1B

# Fig. 2

# Fig. 3

# Fig. 4

# Fig. 5

# Fig. 6

# Fig. 7

# Fig. 8

# Fig. 9

# Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100270469 A
- EP 1706709 A1
- DE 202008002844 U1
- US 2010039103 A1